# EUROPEAN PATENT SPECIFICATION

(11) **EP 3 527 647 B1**
(45) Date of publication and mention of the grant of the patent: **09.11.2022**
(21) Application number: 17862107.4
(22) Date of filing: 29.09.2017
(51) Int. Cl.: C10L 5/40, B09B 3/00, C10B 53/07, B09B 5/00, B29C 48/88

(54) **CARBONIZED FUEL PRODUCTION APPARATUS AND CARBONIZED FUEL PRODUCTION METHOD**
VORRICHTUNG ZUR HERSTELLUNG VON CARBONISIERTEM KRAFTSTOFF UND VERFAHREN ZUR HERSTELLUNG VON CARBONISIERTEM KRAFTSTOFF
APPAREIL DE PRODUCTION DE COMBUSTIBLE CARBONISÉ ET PROCÉDÉ DE PRODUCTION DE COMBUSTIBLE CARBONISÉ

(30) Priority: 17.10.2016 JP 2016203769
(43) Date of publication of application: 21.08.2019
(73) Proprietor: Eco Research Institute Ltd., Tokyo 150-0036 (JP); Eco Bio Plastics Midland Inc., Midland, Michigan 48640 (US)
(72) Inventor: JAMES, Kowalczyk, Saginaw, MI 48604 (US); FRED L., Jones, Canton, MI 48187 (US); MATSUSHITA, Takamichi, Tokyo 150-0036 (JP)
(74) Representative: Schön, Christoph
(86) International application number: PCT/JP2017/035445
(87) International publication number: WO 2018/074189

(56) References cited:
- EP-A1- 0 379 705
- EP-A1- 1 312 452
- JP-A- 2000 273 460
- JP-A- 2008 545 022
- JP-A- 2011 183 372
- JP-B2- 2 927 849

## Description

### [Technical Field]

The present invention relates to an apparatus and a method for manufacturing fuel excellent in quality from resources high in combustion calorie containing synthetic resin and resources containing biomass and the like.

### [Background Art]

Synthetic resin is an essential material in modern life. It is widely used for various products, packaging materials including containers, structural materials, and the like. Moreover, in order to promote recycling of the synthetic resin, synthetic resin for recycling is now being recovered from ordinary households and offices.

For example, synthetic resin bottles (such as so-called PET bottles) are widely being recovered and reused for textile products by cutting and melting those. For such reuse of synthetic resin bottles, however, bottles high in quality are needed to be recovered in order to secure the quality of the textile products, which are the final products. Bottles low in quality are not currently reused.

Moreover, a synthetic resin bottle is formed by mixing various components of synthetic resins. Moreover, various coating agents are used thereon for the purpose of giving the surface of the bottle gas barrier performance and the similar purpose. Due to this, there are sometimes cases where a recycling raw material containing such synthetic resin bottles cannot be used for a material of textile products depending on the components and the coating agent types of those. Moreover, although it can be considered that the relevant raw material is used for manufacturing resin injection molding articles, it is not currently often used caused by inconvenience that it is hardly mixed with other materials depending on the coating agent types or the like, or the similar inconvenience.

As above, while many synthetic resin products are used in the modern society, reuse of those are not proceeding as expected. For example, although synthetic resin pallets or the like which are used by companies in the manufacturing industry, the transportation industry and the like can be used plural times by nature, each of those is often used only once on the ground of labor for management or the similar reason, which results in their disposal. Moreover, while much synthetic resin is used also for structural materials and the like, reuse of those after disposal is not proceeding on the ground of much contamination of waste materials other than the synthetic resin or the similar reason.

The recycling materials as above need their disposal, for example, to be incinerated or reclaimed, in the cases of no usage of those. Moreover, general waste materials and industrial waste materials often contain plastic packaging materials and foam bodies such as styrene foam, or raw garbage, paper and the like. Generally, these waste materials also result in disposal to be incinerated or disposal to be reclaimed.

However, disposal of the recycling materials that cannot be used and the waste materials needs high costs and adversely affects the environment. For example, "Results of Survey on General Waste Disposal Businesses (fiscal year Heisei 26 (2014))" stated by the Ministry of the Environment mentions that 1162 incineration facilities for general waste materials cost two trillion plus yen per year.

Meanwhile, the synthetic resin, which is hardly reused as above, and the waste materials containing the synthetic resin, themselves, contain many calories. Hence, technologies to convert them into fuel have been being variously studied. For example, there is known a fuel manufacturing apparatus developed by the inventors in the present application and their colleagues (Patent Literature 1). The apparatus disclosed in Patent Literature 1 has a twin-screw extruder as its basic configuration, and carbonizes a waste material with heat not applied from the outside by charging the waste material or the like which is a raw material into the twin-screw extruder, giving the raw material shearing force in the apparatus and compressing the raw material therein, which is caused to generate the heat.

### [Citation List]

### [Patent Literature]

[Patent Literature 1]
Japanese Patent No. 2927849
EP 0 379 705 A1 discloses a method of continuously carbonizing a mixture of primarily organic waste material wherein a stream of comminuted waste material with a substantial organic material content is fed to one end of a mixer barrel, the material is compressed to form a barrel filling mass functioning as a first vapor block, and the work energy required to compress it and squeeze out entrapped air is used virtually exclusively to maintain the temperature of the material adiabatically, air and any steam created are vented, the material downstream from the first vapor block is decompressed in a second vent region, the material is recompressed in the absence of air to form another vapor block, while exclusively utilizing the work energy required to compress it to maintain the temperature of the material adiabatically at volatile releasing and carbonizing temperatures, the volatiles are vented, and the product is discharged as a dry, friable particulate char.
JP 2000 273460 A discloses a method for the synthetic coalification of flammable wastes, wherein the method comprises crushing the flammable wastes by the use of a crushing means, drying the crushed wastes with a drying means until reaching a water content of about 10%, feeding the preliminarily dried wastes to a biaxial extruder at a constant feeding rate, heating, holding, kneading and transferring the fed wastes at about 200 ⁰C in the front portion until reaching a water content of several percent, heating, holding, kneading and transferring the dried wastes at about 300 ⁰C in the middle portion, simultaneously melting, decomposing and carbonizing the kneaded wastes under a diluted oxygen, and homogeneously kneading decomposition gas, melted plastics and carbide under a high pressure, and then quenching the kneaded product to 100 ⁰C and discharging the obtained coal-like material from a tip in the rear portion.
EP 1 312 452 A1 discloses a continuous kneading apparatus and a method wherein discharge ports are provided at a plurality of positions of the barrel to discharge a kneaded product, and one of the plurality of the discharge ports is selected according to a desired kneading condition so as to discharge the kneaded product from only the selected discharge port. EP 1 312 452 A1 further discloses another continuous kneading apparatus and method wherein a plurality of charging ports are provided at a plurality of positions of the barrel to supply a material to be kneaded into the chamber, and one of the plurality of charging ports is selected according to a desired kneading condition. The kneading apparatuses and methods permit adjustment and control of a viscosity and a dispersion degree of a compounding agent over a wide range, and continuous kneading to achieve significant rationalization of a process for producing a kneaded product.

### [Summary of Invention]

### [Technical Problem]

The apparatus disclosed in Patent Literature 1 can obtain carbonized fuel excellent in quality by carbonizing a waste material containing plastics, raw garbage and the like with a twin-screw extruder. Nevertheless, there is recently requested a technology to make a waste material into carbonized fuel further more efficiently.

Therefore, an object of the present invention is to improve an apparatus which carbonizes a raw material containing synthetic resin into fuel and a manufacturing method of the carbonized fuel, and also, an object thereof is to provide an apparatus and a method with further more efficiency than a conventional facility.

### [Solution to Problem]

In order to achieve the aforementioned objects, there is provided a fuel manufacturing apparatus of the present invention which continuously manufactures carbonized fuel through carbonization by compressing and kneading an organic raw material at least containing synthetic resin, the apparatus including: a twin-screw extruder including twin screws driven at the same rotational speed in the same direction by drive means, and a casing containing the screws; and control means that controls the drive means, wherein the screw has a rotational shaft and a blade member provided on a surface of the rotational shaft, the casing has an inlet port through which a raw material is charged, an outlet port through which a processed material is extruded, and a plurality of exhaust ports provided between the inlet port and the outlet port, the exhaust ports are provided at at least three places and includes a first exhaust port, a second exhaust port and a third exhaust port in this order from upstream of the casing, the twin-screw extruder has an introduction region from the inlet port to an upstream portion of the first exhaust port, a first exhaust region from the upstream portion of the first exhaust port to a downstream portion of the first exhaust port, a second exhaust region from an upstream portion of the second exhaust port to a downstream portion of the second exhaust port, a third exhaust region from an upstream portion of the third exhaust port to a downstream portion of the third exhaust port, a first kneading region provided between the introduction region and the first exhaust region, a second kneading region provided between the first exhaust region and the second exhaust region, a third kneading region provided between the second exhaust region and the third exhaust region, and an outlet region including a portion from an upstream portion of the outlet port to a position of the outlet port.

Moreover, in the fuel manufacturing apparatus of the present invention, if an angle of the blade member of the rotating screw relative to the rotational shaft is 90° at a maximum in lateral view of the screw, and if inclination of the blade member causing the charged raw material to be transferred to a downstream side is defined as a forward direction inclination while inclination of the blade member causing the charged raw material to be transferred to an upstream side is defined as a backward direction inclination, the introduction region has a forward direction inclination, and the first kneading region has a portion with a forward direction inclination larger than the inclination in the introduction region, the first exhaust region has a forward direction inclination, and the second kneading region has a portion with a forward direction inclination larger than the inclination in the first exhaust region, the second exhaust region has a forward direction inclination, and the third kneading region has a portion with a forward direction inclination larger than the inclination in the second exhaust region, and the third exhaust region has a forward direction inclination, and the outlet region has a portion with a forward direction inclination larger than the inclination in the third exhaust region, and the control means drives the drive means such that a temperature on a downstream side in the first kneading region is 100°C to 150°C, a temperature on a downstream side in the second kneading region is 180°C to 280°C, and a temperature on a downstream side in the third kneading region is 260°C to 320°C.

According to the fuel manufacturing apparatus of the present invention, since the first kneading region is provided between the introduction region and the first exhaust region, exhaust in the first exhaust region is prevented from flowing back to the introduction region. Moreover, since in the first kneading region, the angle of the blade member of the screw is larger than in the introduction region, the transfer speed of the raw material is slow, and the raw material transferred from the introduction region is compressed and kneaded. Likewise, also in the second kneading region and the third kneading region, the raw material is compressed and kneaded.

Moreover, the control means drives the drive means such that a temperature on a downstream side in the first kneading region is 100°C to 150°C, a temperature on a downstream side in the second kneading region is 180°C to 280°C, and a temperature on a downstream side in the third kneading region is 260°C to 320°C and higher than in the second kneading region.

With such control means, in the first exhaust region, synthetic resin contained in the raw material is not vaporized but moisture contained in the raw material is vaporized to be discharged as steam. In this way, since the water content in the raw material is reduced, the raw material can be easily heated by kneading and compression later in the second kneading region and the third kneading region.

Moreover, the temperature of the raw material is gradually raised across the second kneading region and the third kneading region, and thereby, the raw material can be efficiently carbonized eventually in the third kneading region.

Moreover, in the fuel manufacturing apparatus of the present invention, the first kneading region is preferably shorter than the second kneading region in an axial direction, and the second kneading region is preferably shorter than the third kneading region in the axial direction. In such a configuration, since the raw material can be gradually compressed and kneaded across the first kneading region to the third kneading region, and the raw material is heated in stages, the raw material can be efficiently carbonized in the third kneading region.

Moreover, in the fuel manufacturing apparatus of the present invention, the first kneading region preferably has an upstream-side first kneading region continuous from the introduction region and a downstream-side first kneading region provided between the upstream-side first kneading region and the first exhaust region, an inclination of the blade member of the screw in the upstream-side first kneading region is preferably larger than in the introduction region, and the blade member of the screw in the downstream-side first kneading region has a plurality of plate members having an oval shape in axial direction view and disposed in an axial direction at angles shifted in a rotational direction, and the plate members preferably have an inclination of 90°.

According to such a configuration, since the first kneading region is divided into the upstream side and the downstream side, and the inclination of the blade member of the screw in the upstream-side first kneading region is larger than in the introduction region, the raw material can be compressed and kneaded in this upstream-side first kneading region. Moreover, since in the downstream-side first kneading region, the blade member of the screw is formed of the plurality of plate members which are 90° relative to the axial direction, further larger compressive force and shearing force can be given to the raw material passing through this downstream-side first kneading region. In this way, the raw material can be caused to generate heat with its own calories.
Herein, the angle of the blade member in the downstream-side first kneading region may be substantially 90° which is included in margins of approximately ±5 percent.

Moreover, in the fuel manufacturing apparatus of the present invention, the second kneading region preferably has an upstream-side second kneading region continuous from the first exhaust region, and a downstream-side second kneading region provided between the upstream-side second kneading region and the second exhaust region, an inclination of the blade member of the screw in the upstream-side second kneading region is preferably larger than in the first exhaust region, and the blade member of the screw in the downstream-side second kneading region has a plurality of plate members having an oval shape in axial direction view and disposed in an axial direction at angles shifted in a rotational direction, and the plate members preferably have an inclination of 90°.

According to such a configuration, since the second kneading region is divided into the upstream side and the downstream side, and the inclination of the blade member of the screw in the upstream-side second kneading region is larger than in the first exhaust region, the raw material can be compressed and kneaded in this upstream-side second kneading region. Moreover, since in the downstream-side second kneading region, the blade member of the screw is formed of the plurality of plate members which are 90° relative to the axial direction, further larger compressive force and shearing force can be given to the raw material passing through this downstream-side second kneading region. In this way, the raw material can be caused to generate heat with its own calories. Moreover, since the raw material is heated in the first kneading region, the raw material can be further heated in this second kneading region to undergo thermal decomposition. Notably, the angle of 90° is also included in margins of approximately ±5 percent.

Moreover, in the fuel manufacturing apparatus of the present invention, the third kneading region preferably has an upstream-side third kneading region continuous from the second exhaust region, a downstream-side third kneading region continuous to the third exhaust region, and an intermediate third kneading region provided between the upstream-side third kneading region and the downstream-side third kneading region, an inclination of the blade member of the screw in the upstream-side third kneading region is preferably larger than in the second exhaust region, the blade member of the screw in the intermediate third kneading region preferably has a plurality of plate members having an oval shape in axial direction view and disposed in an axial direction at angles shifted in a rotational direction, and the plate members preferably have an inclination of 90°, and in the downstream-side third kneading region, a forward direction region in which the inclination of the blade member of the screw is in a forward direction is preferably provided on an upstream side, and a backward direction region in which the inclination of the blade member of the screw is in a backward direction is preferably provided on a downstream side.

According to such a configuration, since the third kneading region is divided into the upstream side, the intermediate and the downstream side, and the inclination of the blade member of the screw in the upstream-side third kneading region is larger than in the second exhaust region, the raw material can be compressed and kneaded in this upstream-side third kneading region. Moreover, since in the intermediate third kneading region, the blade member of the screw is formed of the plurality of plate members which are 90° relative to the axial direction, further larger compressive force and shearing force can be given to the raw material passing through this intermediate third kneading region.

Furthermore, since downstream-side third kneading region has the forward direction region on the upstream side and the backward direction region on the downstream side, transfer force in the backward direction to the transfer direction is exerted on the raw material in the backward direction region. In this way, friction force and shearing force arise between the raw material and the blade member in the backward direction region, and the raw material can be heated at higher temperature. Therefore, according to such a configuration, the raw material having undergone thermal decomposition in the second kneading region can be further heated in this third kneading region to undergo thermal decomposition and to be carbonized.

The backward direction region in this downstream-side third kneading region is provided in order to cause the raw material to sufficiently stay in the third kneading region. For gradually transferring the raw material to the downstream side, the force for transferring the raw material thereto is needed to be larger than the force for causing the raw material to flow back. Therefore, in the fuel manufacturing apparatus of the present invention, the backward direction region of the downstream-side third kneading region is preferably shorter than the forward direction region in the axial direction.

Moreover, in the fuel manufacturing apparatus of the present invention, the outlet region preferably has an upstream-side outlet region continuous from the third exhaust region, and an outlet opening region continuous from the upstream-side outlet region, and an inclination of the blade member of the screw in the upstream-side outlet region is preferably smaller than in the outlet opening region.

According to such a configuration, the outlet region is divided into the upstream side and the downstream side (outlet opening region), and the inclination of the blade member of the screw in the upstream-side outlet region is smaller than in the outlet opening region. Thereby, the carbonized fuel which is the carbonized raw material can be gradually compressed and transferred to the outlet opening region, and the carbonized fuel can be smoothly extruded through the outlet port.

Moreover, in the fuel manufacturing apparatus of the present invention, the outlet region further preferably has a backward direction end region on a downstream side of the outlet opening region, the blade member of the screw having an inclination of in a backward direction. According to such a configuration, even when the carbonized fuel transferred to the outlet opening region is not extruded through the outlet port, since the backward direction end region returns the carbonized fuel to the outlet opening region, the carbonized fuel can be smoothly extruded through the outlet port.

Next, there is provided a fuel manufacturing method of the present invention for continuously manufacturing carbonized fuel through carbonization by compressing and kneading an organic raw material at least containing synthetic resin with a twin-screw extruder, the method having the following features.

A fuel manufacturing apparatus used for the fuel manufacturing method of the present invention includes a twin-screw extruder including twin screws driven at the same rotational speed in the same direction by drive means, and a casing containing the screws, and control means that controls the drive means, the screw has a rotational shaft and a blade member provided on a surface of the rotational shaft, the casing has an inlet port through which a raw material is charged, an outlet port through which a processed material is extruded, and a plurality of exhaust ports provided between the inlet port and the outlet port, the exhaust ports are provided at at least three places and includes a first exhaust port, a second exhaust port and a third exhaust port in this order from upstream of the casing, and the twin-screw extruder has an introduction region from the inlet port to an upstream portion of the first exhaust port, a first exhaust region from the upstream portion of the first exhaust port to a downstream portion of the first exhaust port, a second exhaust region from an upstream portion of the second exhaust port to a downstream portion of the second exhaust port, a third exhaust region from an upstream portion of the third exhaust port to a downstream portion of the third exhaust port, a first kneading region provided between the introduction region and the first exhaust region, a second kneading region provided between the first exhaust region and the second exhaust region, a third kneading region provided between the second exhaust region and the third exhaust region, and an outlet region including a portion from an upstream portion of the outlet port to a position of the outlet port.

The fuel manufacturing method of the present invention includes: charging the raw material into the inlet port in the state where the twin-screw extruder is being driven by the drive means; transferring the charged raw material to a downstream side in the introduction region; compressing and kneading the raw material in the first kneading region, a transfer speed of the raw material being slower in the first kneading region than in the introduction region; discharging gas contained in the raw material through the first exhaust port in the first exhaust region, the transfer speed of the raw material being faster in the first exhaust region than in the first kneading region to relieve a compression state of the raw material; compressing and kneading the raw material in the second kneading region, the transfer speed of the raw material being slower in the second kneading region than in the first exhaust region; discharging gas contained in the raw material through the second exhaust port in the second exhaust region, the transfer speed of the raw material being faster in the second exhaust region than in the second kneading region to relieve the compression state of the raw material; compressing and kneading the raw material in the third kneading region, the transfer speed of the raw material being slower in the third kneading region than in the second exhaust region; discharging gas contained in the raw material through the third exhaust port in the third exhaust region, the transfer speed of the raw material being faster in the third exhaust region than in third kneading region to relieve the compression state of the raw material; and extruding the raw material having passed through the third exhaust region from the twin-screw extruder in the outlet region, wherein the control means drives the drive means such that a temperature in the first kneading region is 100°C to 150°C, a temperature in the second kneading region is 180°C to 280°C, and a temperature in the third kneading region is 260°C to 320°C and higher than in the second kneading region.

In the fuel manufacturing method of the present invention, in the first kneading region, the temperature of the raw material is controlled to be 100°C to 150°C, and in the first exhaust region, moisture in the raw material is discharged as steam. Moreover, in the second kneading region, the temperature of the raw material is controlled to be 180°C to 280°C, synthetic resin and the like whose dissolving temperature in the raw material is low undergo thermal decomposition to generate flammable gas, which is discharged in the second exhaust region to the outside. Furthermore, in the third kneading region, the temperature of the raw material is controlled to be 260°C to 320°C, synthetic resin and the like whose dissolving temperature in the raw material is high undergo thermal decomposition to generate flammable gas, which is discharged in the third exhaust region to the outside. Such control enables the raw material to efficiently afford carbonized fuel.

In the fuel manufacturing method of the present invention, rotation of the screws preferably imparts backward direction transfer force to the raw material on a downstream side of the third kneading region. In this way, strong compressive force and shearing force can be given to the raw material by giving the backward direction transfer force to the raw material in the third kneading region, and the raw material can be caused to generate heat with its own calories.

According to the aforementioned fuel manufacturing apparatus and fuel manufacturing method of the present invention, with a synthetic resin resource or a waste material containing synthetic resin being as a raw material, solid fuel can be manufactured at low temperature not more than 320°C. Therefore, according to the present invention, the raw material can be made into fuel without need for an incineration facility or the like.

Moreover, according to the fuel manufacturing apparatus and the fuel manufacturing method of the present invention, steam and flammable gas generated in manufacturing solid fuel can be recovered. Therefore, in manufacturing fuel with the fuel manufacturing apparatus, without venting gas such as CO₂, CH₄ and NO_{X}, the fuel can be manufactured.

Moreover, the relevant manufactured fuel is excellent fuel that can be used in a power plant facility or the like, and thus, waste by nature can be made into the fuel. Hence, costs and environmental load can be more reduced than in the case where typical fuel such as coal is used.

### [Brief Description of Drawings]

[Figure 1] Figure 1 is an explanatory drawing schematically showing a fuel manufacturing system including a fuel manufacturing apparatus of the present invention.
[Figure 2] Figure 2 is an explanatory drawing schematically showing the fuel manufacturing apparatus of the present invention.
[Figure 3] Figure 3 is an explanatory drawing showing screws of a twin-screw extruder in the fuel manufacturing apparatus of the present invention.
[Figure 4] Figure 4 is an explanatory drawing showing the shape of a blade member of the screw in an introduction region of the screw in Figure 3.
[Figure 5] Figure 5 is an explanatory drawing showing the shape of the blade member of the screw in a first kneading region of the screw in Figure 3.
[Figure 6] Figure 6 is a reference drawing of a cross-section taken along the VI-VI line in Figure 5.
[Figure 7] Figure 7 is an explanatory drawing showing the shape of the blade member of the screw in a first exhaust region of the screw in Figure 3.
[Figure 8] Figure 8 is an explanatory drawing showing the shape of the blade member of the screw in a second kneading region of the screw in Figure 3.
[Figure 9] Figure 9 is an explanatory drawing showing the shape of the blade member of the screw in any of a second exhaust region and a third exhaust region of the screw in Figure 3.
[Figure 10] Figure 10 is an explanatory drawing showing the shape of the blade member of the screw in a third kneading region of the screw in Figure 3.
[Figure 11] Figure 11 is an explanatory drawing showing the shape of the blade member of the screw in an outlet region of the screw in Figure 3.

### [Description of Embodiments]

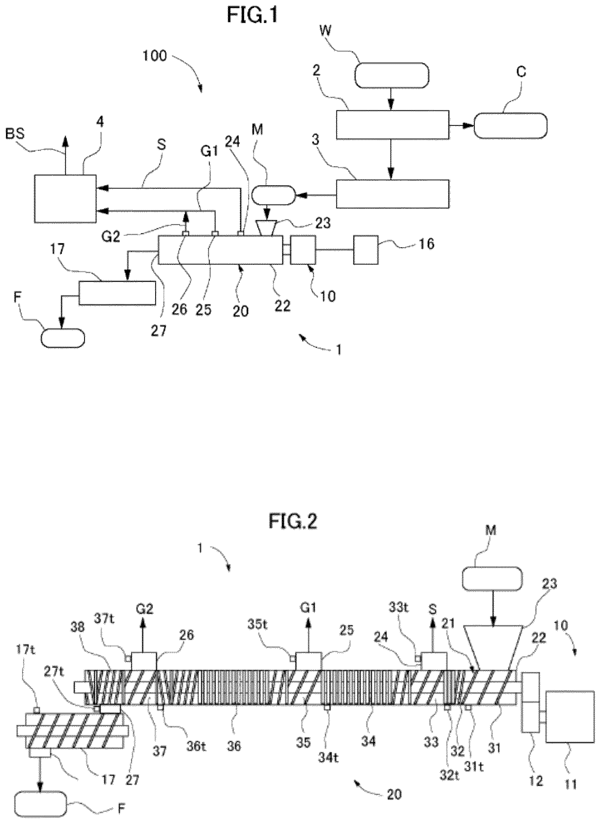

Next, a fuel manufacturing apparatus and a fuel manufacturing method which are embodiments of the present invention are described with reference to Figure 1 to Figure 11.

Figure 1 shows a fuel manufacturing system 100 including a fuel manufacturing apparatus 1 of the present embodiment. The fuel manufacturing system 100 includes a separator 2, a shredder 3 and a boiler 4 as well as the fuel manufacturing apparatus 1.

The fuel manufacturing apparatus 1 is an apparatus which continuously manufactures carbonized fuel through carbonization by compressing and kneading an organic raw material containing synthetic resin. As shown in Figure 2, this fuel manufacturing apparatus 1 includes a drive device (drive means) 10, a twin-screw extruder 20 having twin screws, a control device (control means) 16 and a cooler 17. The drive device 10 has a motor 11 and power transmission gears 12. The twin-screw extruder 20 includes screws 21, a casing 22, an inlet port 23 through which a raw material is charged, a plurality of exhaust ports (a first exhaust port 24, a second exhaust port 25 and a third exhaust port 26), and an outlet port 27 through which a processed material is extruded.

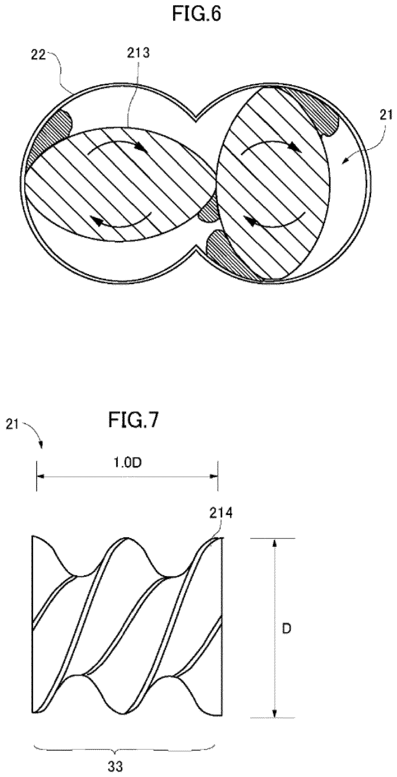

The casing 22 is a member inside which a passage with an eight shape in axial direction view is formed (see Figure 6), and contains the screws 21 inside. Moreover, to the casing 22, the inlet port 23, the first exhaust port 24, the second exhaust port 25, the third exhaust port 26 and the outlet port 27 mentioned above are provided. As above, in the present embodiment, the exhaust ports are provided at three places of the casing 22. Moreover, on the outer circumference of the casing 22, not-shown water jackets are provided and formed such that they can control temperatures individually for regions described below.

In the twin-screw extruder 20, a region in which the inlet port 23 is provided is an introduction region 31, a first kneading region 32 is between the inlet port 23 and the first exhaust port 24, and a region in the vicinity of the first exhaust port 24 is a first exhaust region 33. Moreover, a second kneading region 34 is between the first exhaust port 24 and the second exhaust port 25, and a region in the vicinity of the second exhaust port 25 is a second exhaust region 35. Moreover, a third kneading region 36 is between the second exhaust port 25 and the third exhaust port 26, and a region in the vicinity of the third exhaust port 26 is a third exhaust region 37. Moreover, a region from the third exhaust port 26 to the outlet port 27 is an outlet region 38. In the present embodiment, the first kneading region 32 is shorter than the second kneading region 34 in the axial direction, and the second kneading region 34 is shorter than the third kneading region 36 in the axial direction.

Moreover, to the casing 22, temperature sensors which detect temperatures on the downstream sides of the regions such as the introduction region 31 are provided individually for them. Specifically, an introduction region temperature sensor 31t is for the introduction region 31, a first kneading region temperature sensor 32t is for the first kneading region 32, a second kneading region temperature sensor 34t is for the second kneading region 34, a third kneading region temperature sensor 36t is for the third kneading region 36, and a cooler temperature sensor 17t is for the cooler 17.

Moreover, to the casing 22, temperature sensors which detect temperatures of exhaust gas in the individual exhaust regions are provided. Specifically, a first exhaust region temperature sensor 33t is for the first exhaust region 33, a second exhaust region temperature sensor 35t is for the second exhaust region 35, and a third exhaust region temperature sensor 37t is for the third exhaust region 37. Furthermore, at the outlet port 27 in the outlet region 38, an outlet temperature sensor 27t which detects a temperature of generated carbonized fuel is provided.

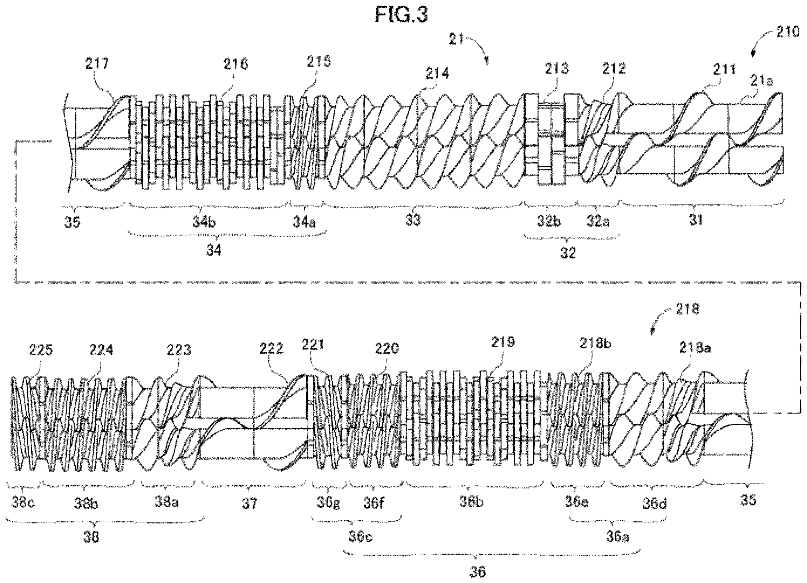

Next, detailed configurations of the aforementioned regions are described with reference to Figure 3 to Figure 11. Figure 3 is a plan view of the screws 21 contained in the casing 22 of the fuel manufacturing apparatus 1 of the present embodiment. The two screws 21 which have the same shapes are provided in parallel and driven by the motor 11 via the power transmission gears 12. Rotational directions of the screws 21 are the same and rotational speeds thereof are also the same. The screw 21 is constituted of a rotational shaft 21a and a blade member 210 (211 to 225).

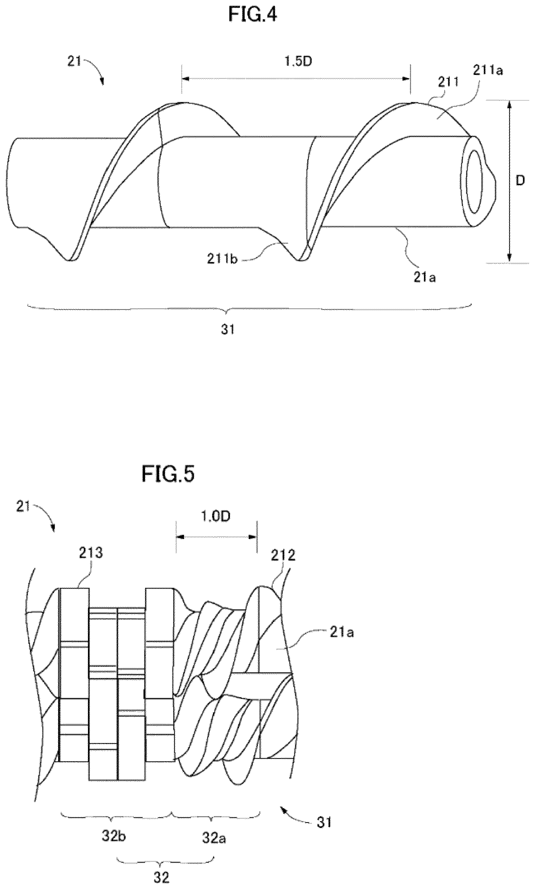

First, as shown in Figure 4, in the introduction region 31, a blade member 211 of the screw 21 is formed into one strip of spiral shape. An angle of the blade member 211 relative to the rotational shaft 21a is formed to be approximately 60° in lateral view, and the pitch is approximately 1.5D (D is the diameter of the screw). As to the shape of the blade member 211 in the introduction region 31, a face 211a on the upstream side is formed to be approximately 90° relative to the surface of the rotational shaft 21a, and a face 211b on the downstream side is formed to be approximately 50° relative to the surface of the rotational shaft 21a. In the present embodiment, an angle of the blade member 211 relative to the rotational shaft 21a is 90° at its maximum, a direction in which the charged raw material is transferred to the downstream side when the screw 21 rotates is defined as a forward direction inclination, and a direction in which it is transferred to the upstream side is defined as a backward direction inclination.

As shown in Figure 5, the first kneading region 32 is divided into an upstream-side first kneading region 32a continuous from the introduction region 31 and a downstream-side first kneading region 32b. In the upstream-side first kneading region 32a, a blade member 212 of the screw 21 is formed into two strips of spiral shapes, an angle of the blade member 212 relative to the rotational shaft 21a is formed to be approximately 70°, and the pitch is approximately 1.0D. Namely, in the first kneading region 32, the blade member 212 of the screw 21 has a portion with a forward direction inclination larger than the inclination of the blade member 211 in the introduction region 31.

Meanwhile, in the downstream-side first kneading region 32b, a blade member 213 exhibits an oval shape (rugby ball shape) shown in Figure 6, and four blade members 213 are provided in the axial direction of the rotational shaft 21a. The four blade members 213 are stacked and fixed in the axial direction with their angles changed in the rotational direction of the rotational shaft 21a. As to the arrangement of those, stacking of those may be made with the adjacent blade members 213 sequentially taking the same angles therebetween, or stacking of those may be made with uneven angles therebetween. Moreover, an inclination of the blade member 213 of the screw 21 in the downstream-side first kneading region 32b in lateral view is formed to be approximately 90°.

As shown in Figure 7, in the first exhaust region 33, the shape of a blade member 214 of the screw 21 is formed into two strips of spiral shapes. An angle of the blade member 214 relative to the rotational shaft 21a is formed to be approximately 70°, and the pitch is approximately 1.0D.

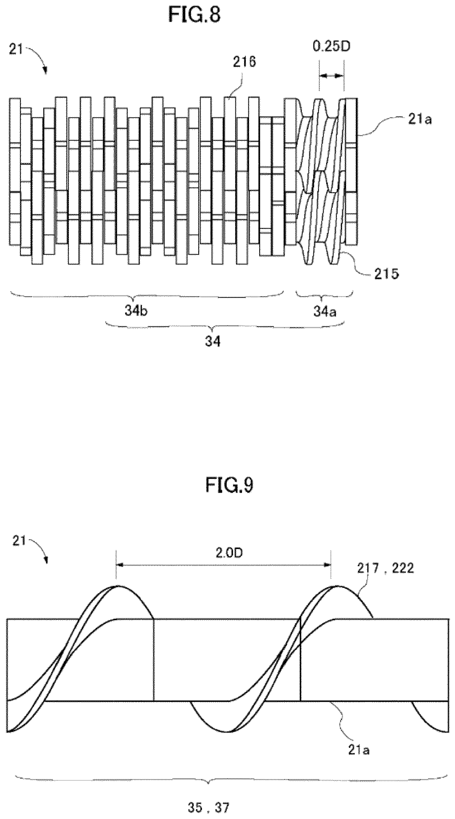

As shown in Figure 8, the second kneading region 34 is divided into an upstream-side second kneading region 34a continuous from the first exhaust region 33 and a downstream-side second kneading region 34b. In the upstream-side second kneading region 34a, a blade member 215 of the screw 21 is formed into one strip of spiral shape. An angle of the blade member 215 relative to the rotational shaft 21a is formed to be approximately 85°, and the pitch is approximately 0.25D.

While in the downstream-side second kneading region 34b, the basic configuration of a blade member 216 of the screw 21 is similar to that in the downstream-side first kneading region 32b, the blade member 216 in the downstream-side second kneading region 34b is smaller in thickness than the blade member in the downstream-side first kneading region 32b. Meanwhile, in the downstream-side second kneading region 34b, the number of blade members 216 is increased more than in the downstream-side first kneading region 32b. In this way, the downstream-side second kneading region 34b is approximately three times as long in the axial direction as the downstream-side first kneading region 32b.

As shown in Figure 9, in the second exhaust region 35, a blade member 217 of the screw 21 is formed into one strip of spiral shape. An angle of the blade member 217 relative to the rotational shaft 21a is formed to be approximately 60°, and the pitch is approximately 2.0D. The sectional shape of the blade member 217 in the second exhaust region 35 is plate-shaped (rectangular).

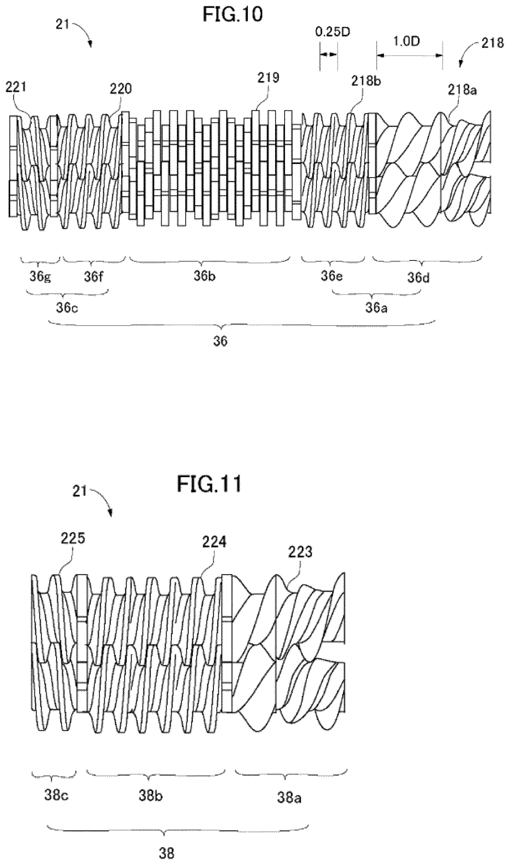

As shown in Figure 10, the third kneading region 36 is divided into an upstream-side third kneading region 36a continuous from the second exhaust region 35, an intermediate third kneading region 36b and a downstream-side third kneading region 36c. In the upstream-side third kneading region 36a, a blade member 218 of the screw 21 is divided into a wide pitch part 36d which has a wider pitch in two strips and a narrow pitch part 36e which has a narrower pitch in one strip in the order from the upstream side.

In the wide pitch part 36d, a blade member 218a of the screw 21 has a wider pitch in two strips, and the pitch is approximately 1.0D. In the narrow pitch part 36e, while the basic configuration of a blade member 218b of the screw 21 is similar to that in the upstream-side second kneading region 34a, the length thereof in the axial direction is approximately twice as large as that in the upstream-side second kneading region 34a. In the intermediate third kneading region 36b, a blade member 219 of the screw 21 is similar to that in the downstream-side second kneading region 34b, and the length thereof in the axial direction is also the same as that therein.

The downstream-side third kneading region 36c has a forward direction region 36f and a backward direction region 36g. A blade member 220 of the screw 21 in the forward direction region 36f has the same configuration as that in the narrow pitch part 36e of the upstream-side third kneading region 36a, and in the backward direction region 36g, the angle relative to the rotational shaft 21a is reverse to that in the forward direction region 36f. While a blade member 221 of the screw 21 in the backward direction region 36g has the same pitch as that in the forward direction region 36f, it is a half as long in the axial direction as in the forward direction region 36f.

The third exhaust region 37 has the same structure as that in the second exhaust region 35 shown in Figure 9. Specifically, a blade member 222 of the screw 21 is formed into one strip of spiral shape. An angle of the blade member 222 relative to the rotational shaft 21a is formed to be approximately 60°, and the pitch is approximately 2.0D (D is the diameter of the screw). Moreover, the sectional shape of the blade member 222 is plate-shaped (rectangular).

As shown in Figure 11, the outlet region 38 is divided into an upstream-side outlet region 38a continuous from the third exhaust region 37 and an outlet opening region 38b, and on the downstream side of the outlet opening region 38b, a backward direction end region 38c in which the blade member of the screw 21 has a backward direction inclination is provided.

In the upstream-side outlet region 38a, while as to the shape of a blade member 223 of the screw 21, its basic configuration is common to that in the wide pitch part 36d of the upstream-side third kneading region 36a, the length in the axial direction is smaller than in the wide pitch part 36d. The outlet opening region 38b is a region opening toward the outlet port 27, and therein, while as to the shape of a blade member 224 of the screw 21, its basic configuration is common to that in the narrow pitch part 36e of the upstream-side third kneading region 36a, the length in the axial direction is larger than in the narrow pitch part 36e. In the upstream-side outlet region 38a, the inclination of the blade member 223 of the screw 21 is smaller than the inclination of the blade member 223 in the outlet opening region 38b. In the backward direction end region 38c, the shape of a blade member 225 of the screw 21 has the same configuration as that in the backward direction region 36g of the downstream-side third kneading region 36c.

Next, a fuel manufacturing method using the fuel manufacturing apparatus 1 of the present embodiment is described for the case where a waste material is a raw material. As shown in Figure 1, a waste material W which is the raw material is charged into the separator 2, and foreign matters C such as inorganics (glass) are removed therefrom. The waste material after the foreign matters C are removed therefrom is charged into the shredder 3 to be pulverized in the size of approximately 5 mm.

While the waste material W which is the raw material includes motley contents, as the waste material charged into the fuel manufacturing apparatus 1 of the present embodiment, one in which an organic waste material containing synthetic resin is a main component is selected. For example, this corresponds to a waste material containing plastic containers, foam bodies such as polystyrene foam, and the like. Rubble and the like in which the content of the organic waste material containing synthetic resin is small are not suitable in being processed by the fuel manufacturing apparatus 1 of the present embodiment.

Moreover, the water content in the waste material W is preferably adjusted to be 20% to 60%. When the water content is less than 20%, compression and kneading are difficult even if charged into the fuel manufacturing apparatus 1. Likewise, when the water content exceeds 60%, it is difficult to sufficiently cause the waste material W to generate heat even if charged into the fuel manufacturing apparatus 1.

A raw material M obtained by pulverizing in the shredder 3 is transferred to the fuel manufacturing apparatus 1 on a not-shown conveyer, and charged into the twin-screw extruder 20 through the inlet port 23. The raw material M charged into the twin-screw extruder 20 is first introduced into the introduction region 31. As shown in Figure 4, in the introduction region 31, the blade member 211 of the screw 21 is formed into one strip of spiral shape, and the pitch is a relatively wide pitch to be 1.5D. Due to this, the charged raw material M is transferred to the next first kneading region 32 at a relatively high speed.

In the first kneading region 32, the raw material M transferred at the relatively high speed is kneaded and compressed with the screw 21 shown in Figure 5. In the upstream-side first kneading region 32a, the raw material is kneaded with the blade member 212 in two strips of spiral shapes. Since in the introduction region 31, the blade member 211 is in one strip with the pitch of 1.5D, and in the upstream-side first kneading region 32a, the pitch is narrower, the transfer speed of the raw material M is slower therein, and the raw material M is kneaded while being compressed.

Next, the raw material M transferred, being compressed and kneaded, by the upstream-side first kneading region 32a is further compressed and kneaded in the downstream-side first kneading region 32b. In the downstream-side first kneading region 32b, it is kneaded with the blade members 213 shown in Figure 6 each of which has an oval shape in axial direction view.

Since in the downstream-side first kneading region 32b, the blade members 213 do not generate transfer force to the downstream side, the raw material in the downstream-side first kneading region 32b is kneaded, being pushed out by the raw material M being transferred from the upstream-side first kneading region 32a. Meanwhile, since this first kneading region 32 is shorter in length in the axial direction than the others, the second kneading region 34 and the third kneading region 36, heat generated through compression and kneading of the raw material M in this first kneading region 32 is small. The temperature of the raw material M in this downstream-side first kneading region 32b is detected by the first kneading region temperature sensor 32t, and adjusted by the control device 16 such that its value is 100°C to 150°C.

Next, the raw material M is transferred to the first exhaust region 33. As shown in Figure 7, in the first exhaust region 33, the shape of the blade member 214 of the screw 21 is in one strip of spiral shape, the angle of the blade member 214 relative to the rotational shaft 21a is formed to be approximately 70°, and the pitch is approximately 1.0D. Here, the transfer speed of the compressed raw material M is fast, and the compression state thereof is relieved.

Since the raw material M is compressed and kneaded in the first kneading region 32 and is generating heat, when the compression state is relieved by its transfer to the first exhaust region 33, moisture in the raw material M is vaporized into steam S and discharged through the first exhaust port 24 to the outside. Meanwhile, the heat generated in the first kneading region 32 is small, and components of synthetic resin contained in the raw material M have not been yet vaporized. Hence, vaporized components of synthetic resin are not discharged through the first exhaust port 24.

Moreover, since the upstream side of the first exhaust region 33 is the first kneading region 32 and the downstream side thereof is the second kneading region 34 mentioned later, in both of them, the raw material M is in the compressed state. Therefore, gas containing the steam S generated in the first exhaust region 33 does not flow back to the introduction region 31 or proceed to the second kneading region 34.

Next, the raw material M is transferred to the second kneading region 34. In the second kneading region 34, it is first transferred to the upstream-side second kneading region 34a. In the upstream-side second kneading region 34a, the blade member 215 of the screw 21 is in one strip of spiral shape, the angle of the blade member 215 relative to the rotational shaft 21a is formed to be approximately 85°, and the pitch is approximately 0.25D.

Therefore, in the upstream-side second kneading region 34a, the transfer speed of the raw material M transferred from the first exhaust region 33 is slow, and the raw material M is compressed. Moreover, since the angle of the blade member 215 is close to 90° and the pitch is narrow, strong transfer force is given to the raw material M.

Next, the raw material M is transferred to the downstream-side second kneading region 34b. In the downstream-side second kneading region 34b, the plurality of blade members 216 each of which has an oval shape in axial direction view are stacked in the axial direction, and since the blade members 216 do not generate transfer force to the downstream side, the raw material in the downstream-side second kneading region 34b is kneaded, being pushed out by the raw material M being transferred from the upstream-side second kneading region 34a.

Moreover, since this downstream-side second kneading region 34b is longer in the axial direction than the downstream-side first kneading region 32b, compression and kneading of the raw material M in this downstream-side second kneading region 34b exert much shearing force and compressive force on the raw material M, and the raw material M itself generates much heat. The temperature of the raw material M in this stage is detected by the second kneading region temperature sensor 34t, and adjusted by the control device 16 such that its value is 180°C to 280°C.

Next, the raw material is transferred to the second exhaust region 35. As shown in Figure 9, in the second exhaust region 35, the shape of the blade member 217 of the screw 21 is in one strip of spiral shape, the angle of the blade member 217 relative to the rotational shaft 21a is formed to be approximately 60°, and the pitch is approximately 2.0D. Here, the transfer speed of the raw material M compressed and heated by the second kneading region 34 is fast, and the compression state thereof is relieved.

Since the raw material M is compressed and kneaded by the second kneading region 34 to be heated at the temperature of 180°C to 280°C, when the compression state is relieved, flammable gas G1 generated through thermal decomposition of the raw material M is ejected into the second exhaust region 35. While components of the flammable gas G1 in this stage depend on the components of the contents of the raw material M, hydrocarbon is a main component.

Moreover, since the upstream side of the second exhaust region 35 is the second kneading region 34 and the downstream side thereof is the third kneading region 36, in both of them, the raw material M is in the compressed state. Therefore, the flammable gas G1 generated in the second exhaust region 35 does not flow back to the second kneading region 34 or proceed to the third kneading region 36.

Next, the raw material M is transferred to the third kneading region 36. As shown in Figure 10, the third kneading region 36 is divided into the upstream-side third kneading region 36a, the intermediate third kneading region 36b and the downstream-side third kneading region 36c.

In the upstream-side third kneading region 36a, the raw material M is first transferred to the wide pitch part 36d. In the second exhaust region 35 on the upstream side, the compression state of the raw material M is relieved. In this wide pitch part 36d, since the blade member 218a of the screw 21 is in two strips, and the pitch is approximately 0.9D, the transfer speed of the raw material M passing through the wide pitch part 36d is slow, and it is gradually compressed. The transfer speed of the raw material M which has been compressed by the wide pitch part 36d to some extent as above becomes further slower and it is further compressed by the narrow pitch part 36e in which the pitch of the blade member 218b is approximately 0.25D.

In the intermediate third kneading region 36b, the blade member 219 of the screw 21 is similar to that in the downstream-side second kneading region 34b. Accordingly, the raw material M on which strong transfer force is exerted by compression in the narrow pitch part 36e of the upstream-side third kneading region 36a passes through this intermediate third kneading region 36b, thereby, much shearing force and compressive force are exerted on the raw material M, and the raw material M itself generates much heat.

In the downstream-side third kneading region 36c, strong transfer force is exerted on the raw material M by the forward direction region 36f which has a narrow pitch similar to that of narrow pitch part 36e of the upstream-side third kneading region 36a. Then, when the raw material M is transferred to the backward direction region 36g, transfer force in the backward direction against the transfer direction is exerted on the raw material M in the backward direction region 36g. Here, as to the transfer force, since the forward direction region 36f is twice as long in the axial direction as the backward direction region 36g, the transfer force exerted on the raw material M is larger in the forward direction.

Therefore, in the backward direction region 36g, while the transfer force in the backward direction is being exerted on the raw material M, the raw material M is being transferred in the forward direction. Hence, since strong friction force and shearing force with the blade member 221 are exerted on the raw material M, the temperature of the raw material M becomes high. This temperature of the raw material M in the downstream-side third kneading region 36c is detected by the third kneading region temperature sensor 36t, and is adjusted by the control device 16 such that its value is 260°C to 320°C. Notably, the control device 16 performs control such that the temperature of the raw material M in the third kneading region 36 is higher than the temperature thereof in the second kneading region 34.

Next, the raw material M is transferred to the third exhaust region 37. Since in the third exhaust region 37, the shape of the blade member 222 of the screw 21 is the same as in the second exhaust region 35, flammable gas G2 generated from the raw material M is ejected also in the third exhaust region 37. A main component of the flammable gas recovered in the third exhaust region 37 has a higher ratio of hydrocarbon component to the whole gas than in the second exhaust region. The cause is considered as that in the third kneading region 36, higher heat is generated than in the second kneading region 34.

Next, the raw material M is transferred to the outlet region 38 shown in Figure 11. In the outlet region 38, the raw material M is first transferred to the upstream-side outlet region 38a. In the upstream-side outlet region 38a, the blade member 223 of the screw 21 is in two strips, and the pitch is approximately 0.9D. The raw material M from which the compressive force has been relieved in the third exhaust region 37 on the upstream side is being compressed again in this upstream-side outlet region 38a and being transferred to the outlet opening region 38b.

Since in the outlet opening region 38b, the pitch of the blade member 224 is approximately 0.25D, the raw material M is being further compressed and transferred to the downstream side. Moreover, since in the outlet opening region 38b, the outlet port 27 opens downward, the transferred raw material M is extruded through the outlet port 27 to the outside of the twin-screw extruder 20.

Here, when in the outlet opening region 38b, there is some raw material M that is not extruded through the outlet port 27 to the outside caused by its sticking to the blade member 224 of the screw 21 or the similar situation, the relevant raw material M is returned to the outlet opening region 38b by the blade member 225 in the backward direction end region 38c provided on the downstream side of the outlet opening region 38b. In this way, even when there is some raw material M which has once passed through the outlet opening region 38b, it is returned again to the outlet opening region 38b by the backward direction end region 38c and extruded through the outlet port 27 to the outside.

As shown in Figure 1 and Figure 2, the raw material M extruded through the outlet port 27 is cooled by the cooler 17 and taken out as fuel F. In the cooler 17, the raw material M processed at the temperature of 260°C to 310°C is cooled at or below approximately 200°C. A not-shown water jacket is provided on the outer circumference of the cooler 17, and water heated in the water jacket is used as water for generating steam in the boiler 4. In the boiler 4, steam BS is generated with the flammable gases G1 and G2 being as fuel, and the steam BS is fed to a generator (not shown), an air conditioner or the like.

Notably, the present invention is not limited to the configuration exemplarily described in the aforementioned embodiment. For example, while the three exhaust ports of the first exhaust port 24, the second exhaust port 25 and the third exhaust port have been exemplarily described, they are not limited to those three but another exhaust port may be added as needed.

### [Reference Signs List]

- 1: Fuel manufacturing apparatus
- 10: Drive device
- 16: Control device (control means)
- 20: Twin-screw extruder
- 21: Screw
- 21a: Rotational shaft
- 210: Blade member
- 22: Casing
- 23: Inlet port
- 24: First exhaust port
- 25: Second exhaust port
- 26: Third exhaust port
- 27: Outlet port
- 32: First kneading region
- 33: First exhaust region
- 34: Second kneading region
- 35: Second exhaust region
- 36: Third kneading region
- 37: Third exhaust region
- 38: Outlet region

## Claims

1. A fuel manufacturing apparatus (1) which continuously manufactures carbonized fuel through carbonization by compressing and kneading an organic raw material at least containing synthetic resin, the apparatus comprising:
a twin-screw extruder (20) including twin screws driven at the same rotational speed in the same direction by drive means (10), and a casing (22) containing the screws; and control means (16) that controls the drive means (10), wherein
the screw (21) has a rotational shaft (21a) and a blade member (210) provided on a surface of the rotational shaft (21a),
the casing (22) has an inlet port (23) through which a raw material is charged, an outlet port (27) through which a processed material is extruded, and a plurality of exhaust ports (24, 25, 26) provided between the inlet port (23) and the outlet port (27),
the exhaust ports (24, 25, 26) are provided at at least three places and includes a first exhaust port (24), a second exhaust port (25) and a third exhaust port (26) in this order from upstream of the casing (22),
the twin-screw extruder (20) has an introduction region (31) from the inlet port (23) to an upstream portion of the first exhaust port (24), a first exhaust region (33) from the upstream portion of the first exhaust port (24) to a downstream portion of the first exhaust port (24), a second exhaust region (35) from an upstream portion of the second exhaust port (25) to a downstream portion of the second exhaust port (25), a third exhaust region (37) from an upstream portion of the third exhaust port (26) to a downstream portion of the third exhaust port (26), a first kneading region (32) provided between the introduction region (31) and the first exhaust region (33), a second kneading region (34) provided between the first exhaust region (33) and the second exhaust region (35), a third kneading region (36) provided between the second exhaust region (35) and the third exhaust region (37), and an outlet region (38) including a portion from an upstream portion of the outlet port (27) to a position of the outlet port (27), wherein
if an angle of the blade member (210) of the rotating screw relative to the rotational shaft (21a) is 90° at a maximum in lateral view of the screw, and if inclination of the blade member (210) causing the charged raw material to be transferred to a downstream side is defined as a forward direction inclination while inclination of the blade member (210) causing the charged raw material to be transferred to an upstream side is defined as a backward direction inclination,
the introduction region (31) has a forward direction inclination, and the first kneading region (32) has a portion with a forward direction inclination larger than the inclination in the introduction region (31),
the first exhaust region (33) has a forward direction inclination, and the second kneading region (34) has a portion with a forward direction inclination larger than the inclination in the first exhaust region (33),
the second exhaust region (35) has a forward direction inclination, and the third kneading region (36) has a portion with a forward direction inclination larger than the inclination in the second exhaust region (35), and
the third exhaust region (37) has a forward direction inclination, and the outlet region (38) has a portion with a forward direction inclination larger than the inclination in the third exhaust region (37), and
the control means (16) drives the drive means (10) such that a temperature on a downstream side in the first kneading region (32) is 100°C to 150°C, a temperature on a downstream side in the second kneading region (34) is 180°C to 280°C, and a temperature on a downstream side in the third kneading region (36) is 260°C to 320°C and higher than in the second kneading region (34).

2. The fuel manufacturing apparatus (1) according to Claim 1, wherein the first kneading region (32) is shorter than the second kneading region (34) in an axial direction, and the second kneading region (34) is shorter than the third kneading region (36) in the axial direction.

3. The fuel manufacturing apparatus (1) according to Claim 1 or 2, wherein
the first kneading region (32) has an upstream-side first kneading region (32a) continuous from the introduction region (31) and a downstream-side first kneading region (32b) provided between the upstream-side first kneading region (32a) and the first exhaust region (33),
an inclination of the blade member (212) of the screw (21) in the upstream-side first kneading region (32a) is larger than in the introduction region (31), and
the blade member (213) of the screw (21) in the downstream-side first kneading region (32b) has a plurality of blade members (213) having an oval shape in axial direction view and disposed in an axial direction at angles shifted in a rotational direction, and the blade members (213) have an inclination of 90°.

4. The fuel manufacturing apparatus (1) according to Claim 1 or 2, wherein
the second kneading region (34) has an upstream-side second kneading region (34a) continuous from the first exhaust region (33) and a downstream-side second kneading region (34b) provided between the upstream-side second kneading region (34a) and the second exhaust region (35),
an inclination of the blade member (215) of the screw (21) in the upstream-side second kneading region (34a) is larger than in the first exhaust region (33), and
the blade member (216) of the screw (21) in the downstream-side second kneading region (34b) has a plurality of blade members (216)having an oval shape in axial direction view and disposed in an axial direction at angles shifted in a rotational direction, and the blade members (216) have an inclination of 90°.

5. The fuel manufacturing apparatus (1) according to Claim 1 or 2, wherein
the third kneading region (36) has an upstream-side third kneading region (36a) continuous from the second exhaust region (35), a downstream-side third kneading region (36c) continuous to the third exhaust region (37), and an intermediate third kneading region (36b) provided between the upstream-side third kneading region (36a) and the downstream-side third kneading region (36c),
an inclination of the blade member (218) of the screw (21) in the upstream-side third kneading region (36a) is larger than in the second exhaust region (35),
the blade member (219) of the screw (21) in the intermediate third kneading region (36b) has a plurality of blade members (219) having an oval shape in axial direction view disposed in an axial direction at angles shifted in a rotational direction, and the blade members (219) have an inclination of 90°, and
in the downstream-side third kneading region (36c), a forward direction region (36f) in which the inclination of the blade member (220) of the screw (21) is in a forward direction is provided on an upstream side, and a backward direction region (36g) in which the inclination of the blade member (221) of the screw (21) is in a backward direction is provided on a downstream side.

6. The fuel manufacturing apparatus (1) according to Claim 5, wherein the backward direction region (36g) of the downstream-side third kneading region (36c) is shorter than the forward direction region (36f) in the axial direction.

7. The fuel manufacturing apparatus (1) according to Claim 1 or 2,
the outlet region (38) has an upstream-side outlet region (38a) continuous from the third exhaust region (37), and an outlet opening region (38b) continuous from the upstream-side outlet region (38a), and
an inclination of the blade member (223) of the screw (21) in the upstream-side outlet region (38a) is smaller than in the outlet opening region (38b).

8. The fuel manufacturing apparatus (1) according to Claim 7, wherein
the outlet region (38) further has a backward direction end region (38c) on a downstream side of the outlet opening region (38b), the blade member (225) of the screw (21) having an inclination in a backward direction.

9. A fuel manufacturing method for continuously manufacturing carbonized fuel through carbonization by compressing and kneading an organic raw material at least containing synthetic resin with a fuel manufacturing apparatus (1),
the fuel manufacturing apparatus (1) including a twin-screw extruder (20) including twin screws driven at the same rotational speed in the same direction by drive means (10), and a casing (22) containing the screws, and control means (16) that controls the drive means (10),
the screw (21) having a rotational shaft (21a) and a blade member (210) provided on a surface of the rotational shaft (21a),
the casing (22) having an inlet port (23) through which a raw material is charged, an outlet port (27) through which a processed material is extruded, and a plurality of exhaust ports (24, 25, 26) provided between the inlet port (23) and the outlet port (27),
the exhaust ports (24, 25, 26) provided at at least three places and includes a first exhaust port (24), a second exhaust port (25) and a third exhaust port (26) in this order from upstream of the casing (22),
the twin-screw extruder (20) having an introduction region (31) from the inlet port (23) to an upstream portion of the first exhaust port (24), a first exhaust region (33) from the upstream portion of the first exhaust port (24) to a downstream portion of the first exhaust port (24), a second exhaust region (35) from an upstream portion of the second exhaust port (25) to a downstream portion of the second exhaust port (25), a third exhaust region (37) from an upstream portion of the third exhaust port (26) to a downstream portion of the third exhaust port (26), a first kneading region (32) provided between the introduction region (31) and the first exhaust region (33), a second kneading region (34) provided between the first exhaust region (33) and the second exhaust region (35), a third kneading region (36) provided between the second exhaust region (35) and the third exhaust region (37), and an outlet region (38) including a portion from an upstream portion of the outlet port (27) to a position of the outlet port (27), the method comprising:
charging the raw material into the inlet port (23) in the state where the twin-screw extruder (20) is being driven by the drive means (10);
transferring the charged raw material to a downstream side in the introduction region (31);
compressing and kneading the raw material in the first kneading region (32), a transfer speed of the raw material being slower in the first kneading region (32) than in the introduction region (31);
discharging gas contained in the raw material through the first exhaust port (24) in the first exhaust region (33), the transfer speed of the raw material being faster in the first exhaust region (33) than in the first kneading region (32) to relieve a compression state of the raw material;
compressing and kneading the raw material in the second kneading region (34), the transfer speed of the raw material being slower in the second kneading region (34) than in the first exhaust region (33);
discharging gas contained in the raw material through the second exhaust port (25) in the second exhaust region (35), the transfer speed of the raw material being faster in the second exhaust region (35) than in the second kneading region (34) to relieve the compression state of the raw material;
compressing and kneading the raw material in the third kneading region (36), the transfer speed of the raw material being slower in the third kneading region (36) than in the second exhaust region (35);
discharging gas contained in the raw material through the third exhaust port (26) in the third exhaust region (37), the transfer speed of the raw material being faster in the third exhaust region (37) than in third kneading region (36) to relieve the compression state of the raw material; and
extruding the raw material having passed through the third exhaust region (37) from the twin-screw extruder (20) in the outlet region (38), wherein
the control means (16) drives the drive means (10) such that a temperature in the first kneading region (32) is 100°C to 150°C, a temperature in the second kneading region (34) is 180°C to 280°C, and a temperature in the third kneading region (36) is 260°C to 320°C and higher than in the second kneading region (34).

10. The fuel manufacturing method according to Claim 9, wherein rotation of the screws imparts backward direction transfer force to the raw material on a downstream side of the third kneading region (36).

## Patentansprüche

1. Kraftstoffherstellungsvorrichtung (1), die kontinuierlich karbonisierten Kraftstoff durch Karbonisierung mittels Komprimieren und Kneten eines organischen Rohmaterials, das zumindest synthetisches Harz enthält, herstellt, wobei die Vorrichtung Folgendes umfasst:
einen Doppelschneckenextruder (20), der Doppelschnecken, die mit der gleichen Rotationsgeschwindigkeit in der gleichen Richtung durch ein Antriebsmittel (10) angetrieben werden, und ein die Schnecken enthaltendes Gehäuse (22) umfasst; sowie eine Steuervorrichtung (16), das Antriebsmittel (10) steuert, wobei
die Schnecke (21) eine Rotationswelle (21a) und ein Klingenelement (210), das auf einer Oberfläche der Rotationswelle (21a) bereitgestellt ist, aufweist,
das Gehäuse (22) eine Eingabeöffnung (23), durch die ein Rohmaterial zugeführt wird, eine Ausgabeöffnung (27), durch die ein verarbeitetes Material extrudiert wird, und eine Mehrzahl von Auslassöffnungen (24, 25, 26), die zwischen der Eingabeöffnung (23) und der Ausgabeöffnung (27) vorgesehen sind, aufweist,
die Auslassöffnungen (24, 25, 26) an mindestens drei Stellen bereitgestellt sind und eine erste Auslassöffnung (24), eine zweite Auslassöffnung (25) und eine dritte Auslassöffnung (26) in dieser Reihenfolge von stromauf des Gehäuses (22) umfassen,
der Doppelschneckenextruder (20) einen Einführungsbereich (31) von der Eingabeöffnung (23) zu einem stromaufseitigen Abschnitt der ersten Auslassöffnung (24), einen ersten Auslassbereich (33) von dem stromaufseitigen Abschnitt der ersten Auslassöffnung (24) zu einem stromabseitigen Abschnitt der ersten Auslassöffnung (24), einen zweiten Auslassbereich (35) von einem stromaufseitigen Abschnitt der zweiten Auslassöffnung (25) zu einem stromabseitigen Abschnitt der zweiten Auslassöffnung (25), einen dritten Auslassbereich (37) von einem stromaufseitigen Abschnitt der dritten Auslassöffnung (26) zu einem stromabseitigen Abschnitt der dritten Auslassöffnung (26), einen ersten Knetbereich (32), der zwischen dem Einführungsbereich (31) und dem ersten Auslassbereich (33) vorgesehen ist, einen zweiten Knetbereich (34), der zwischen dem ersten Auslassbereich (33) und dem zweiten Auslassbereich (35) vorgesehen ist, einen dritten Knetbereich (36), der zwischen dem zweiten Auslassbereich (35) und dem dritten Auslassbereich (37) vorgesehen ist, und einen Ausgabebereich (38), der einen Abschnitt von einem stromaufseitigen Abschnitt der Ausgabeöffnung (27) zu einer Position der Ausgabeöffnung (27) umfasst, aufweist, wobei
wenn ein Winkel des Klingenelements (210) der rotierenden Schnecke relativ zu der Rotationswelle (21a) in Seitenansicht der Schnecke maximal 90° beträgt und wenn eine Neigung des Klingenelements (210), die bewirkt, dass das zugeführte Rohmaterial zu einer stromabseitigen Seite überführt wird, als Vorwärtsrichtung-Neigung definiert ist, während die Neigung des Klingenelements (210), die bewirkt, dass das zugeführte Rohmaterial zu einer stromaufseitigen Seite überführt wird, als Rückwärtsrichtung-Neigung definiert ist,
der Einführungsbereich (31) eine Vorwärtsrichtung-Neigung aufweist und der erste Knetbereich (32) einen Abschnitt mit einer Vorwärtsrichtung-Neigung, die größer als die Neigung in dem Einführungsbereich (31) ist, aufweist,
der erste Auslassbereich (33) eine Vorwärtsrichtung-Neigung aufweist und der zweite Knetbereich (34) einen Abschnitt mit einer Vorwärtsrichtung-Neigung, die größer als die Neigung in dem ersten Auslassbereich (33) ist, aufweist,
der zweite Auslassbereich (35) eine Vorwärtsrichtung-Neigung aufweist und der dritte Knetbereich (36) einen Bereich mit einer Vorwärtsrichtung-Neigung, die größer als die Neigung in dem zweiten Auslassbereich (35) ist, aufweist und
der dritte Auslassbereich (37) eine Vorwärtsrichtung-Neigung aufweist und der Ausgabebereich (38) einen Abschnitt mit einer Vorwärtsrichtung-Neigung, die größer als die Neigung in dem dritten Auslassbereich (37) ist, aufweist und
die Steuervorrichtung (16) das Antriebsmittel (10) so antreibt, dass eine Temperatur auf einer stromabseitigen Seite in dem ersten Knetbereich (32) 100°C bis 150°C beträgt, eine Temperatur auf einer stromabseitigen Seite in dem zweiten Knetbereich (34) 180°C bis 280°C beträgt und eine Temperatur auf einer stromabseitigen Seite in dem dritten Knetbereich (36) 260°C bis 320°C beträgt und höher als in dem zweiten Knetbereich (34) ist.

2. Kraftstoffherstellungsvorrichtung (1) gemäß Anspruch 1, wobei der erste Knetbereich (32) in einer axialen Richtung kürzer als der zweite Knetbereich (34) ist und der zweite Knetbereich (34) in der axialen Richtung kürzer als der dritte Knetbereich (36) ist.

3. Kraftstoffherstellungsvorrichtung (1) gemäß Anspruch 1 oder Anspruch 2, wobei
der erste Knetbereich (32) einen stromaufseitigen ersten Knetbereich (32a), der sich kontinuierlich von dem Einführungsbereich (31) erstreckt, und einen stromabseitigen ersten Knetbereich (32b), der zwischen dem stromaufseitigen ersten Knetbereich (32a) und dem ersten Auslassbereich (33) vorgesehen ist, aufweist,
eine Neigung des Klingenelements (212) der Schnecke (21) in dem stromaufseitigen ersten Knetbereich (32a) größer als in dem Einführungsbereich (31) ist, und
das Klingenelement (213) der Schnecke (21) in dem stromabseitigen ersten Knetbereich (32b) eine Mehrzahl von Klingenelementen (213) aufweist, welche bei Ansicht in axialer Richtung eine ovale Form aufweisen und in axialer Richtung in Winkeln angeordnet sind, die in Rotationsrichtung versetzt sind, und wobei die Klingenelemente (213) eine Neigung von 90° aufweisen.

4. Kraftstoffherstellungsvorrichtung (1) gemäß Anspruch 1 oder Anspruch 2, wobei
der zweite Knetbereich (34) einen stromaufseitigen zweiten Knetbereich (34a), der sich kontinuierlich von dem ersten Auslassbereich (33) erstreckt, und einen stromabseitigen zweiten Knetbereich (34b), der zwischen dem stromaufseitigen zweiten Knetbereich (34a) und dem zweiten Auslassbereich (35) vorgesehen ist, aufweist,
eine Neigung des Klingenelements (215) der Schnecke (21) in dem stromaufseitigen zweiten Knetbereich (34a) größer als in dem ersten Auslassbereich (33) ist, und
das Klingenelement (216) der Schnecke (21) in dem stromabseitigen zweiten Knetbereich (34b) eine Mehrzahl von Klingenelementen (216), welche bei Ansicht in axialer Richtung eine ovale Form aufweisen und in axialer Richtung in Winkeln angeordnet sind, die in Rotationsrichtung versetzt sind, aufweist und die Klingenelemente (216) eine Neigung von 90° aufweisen.

5. Kraftstoffherstellungsvorrichtung (1) gemäß Anspruch 1 oder Anspruch 2, wobei
der dritte Knetbereich (36) einen stromaufseitigen dritten Knetbereich (36a), der sich kontinuierlich von dem zweiten Auslassbereich (35) erstreckt, einen stromabseitigen dritten Knetbereich (36c), der sich kontinuierlich zu dem dritten Auslassbereich (37) erstreckt, und einen dazwischen liegenden dritten Knetbereich (36b), der zwischen dem stromaufseitigen dritten Knetbereich (36a) und dem stromabseitigen dritten Knetbereich (36c) vorgesehen ist, aufweist,
eine Neigung des Klingenelements (218) der Schnecke (21) in dem stromaufseitigen dritten Knetbereich (36a) größer als in dem zweiten Auslassbereich (35) ist,
das Klingenelement (219) der Schnecke (21) in dem dazwischen liegenden dritten Knetbereich (36b) eine Mehrzahl von Klingenelementen (219), welche bei Ansicht in axialer Richtung eine ovale Form aufweisen und in einer axialen Richtung in Winkeln angeordnet sind, die in einer Rotationsrichtung versetzt sind, aufweist und die Klingenelemente (219) eine Neigung von 90° aufweisen, und
in dem stromabseitigen dritten Knetbereich (36c) ein Vorwärtsrichtung-Bereich (36f), in dem die Neigung des Klingenelements (220) der Schnecke (21) in einer Vorwärtsrichtung verläuft, auf einer stromaufseitigen Seite vorgesehen ist und ein Rückwärtsrichtung-Bereich (36g), in dem die Neigung des Klingenelements (221) der Schnecke (21) in einer Rückwärtsrichtung verläuft, auf einer stromabseitigen Seite vorgesehen ist.

6. Kraftstoffherstellungsvorrichtung (1) gemäß Anspruch 5, wobei der Rückwärtsrichtung-Bereich (36g) des stromabseitigen dritten Knetbereichs (36c) in der axialen Richtung kürzer als der Vorwärtsrichtung-Bereich (36f) ist.

7. Kraftstoffherstellungsvorrichtung (1) gemäß Anspruch 1 oder Anspruch 2, wobei
der Ausgabebereich (38) einen stromaufseitigen Ausgabebereich (38a), der sich kontinuierlich von dem dritten Auslassbereich (37) erstreckt, und einen Ausgabeöffnungsbereich (38b), der sich kontinuierlich von dem stromaufseitigen Ausgabebereich (38a) erstreckt, aufweist, und
eine Neigung des Klingenelements (223) der Schnecke (21) in dem stromaufseitigen Ausgabebereich (38a) kleiner als in dem Ausgabeöffnungsbereich (38b) ist.

8. Kraftstoffherstellungsvorrichtung (1) gemäß Anspruch 7, wobei
der Ausgabebereich (38) des Weiteren einen Rückwärtsrichtung-Endbereich (38c) auf einer stromabseitigen Seite des Ausgabeöffnungsbereichs (38b) aufweist, wobei das Klingenelement (225) der Schnecke (21) eine Neigung in einer Rückwärtsrichtung aufweist.

9. Kraftstoffherstellungsverfahren zum kontinuierlichen Herstellen von karbonisiertem Kraftstoff durch Karbonisierung mittels Komprimieren und Kneten eines organischen Rohmaterials, das zumindest synthetisches Harz enthält, mithilfe einer Kraftstoffherstellungsvorrichtung (1),
wobei die Kraftstoffherstellungsvorrichtung (1) Folgendes umfasst:
einen Doppelschneckenextruder (20), der Doppelschnecken, die mit der gleichen Rotationsgeschwindigkeit in der gleichen Richtung durch ein Antriebsmittel (10) angetrieben werden, und ein die Schnecken enthaltendes Gehäuse (22) umfasst, sowie eine Steuervorrichtung (16), die das Antriebsmittel (10) steuert, wobei
die Schnecke (21) eine Rotationswelle (21a) und ein Klingenelement (210), das auf einer Oberfläche der Rotationswelle (21a) vorgesehen ist, aufweist,
das Gehäuse (22) eine Eingabeöffnung (23), durch die ein Rohmaterial zugeführt wird, eine Ausgabeöffnung (27), durch die ein verarbeitetes Material extrudiert wird, und eine Mehrzahl von Auslassöffnungen (24, 25, 26), die zwischen der Eingabeöffnung (23) und der Ausgabeöffnung (27) vorgesehen sind, aufweist,
die Auslassöffnungen (24, 25, 26) an mindestens drei Stellen bereitgestellt sind und eine erste Auslassöffnung (24), eine zweite Auslassöffnung (25) und eine dritte Auslassöffnung (26) in dieser Reihenfolge von stromauf des Gehäuses (22) umfassen,
der Doppelschneckenextruder (20) einen Einführungsbereich (31) von der Eingabeöffnung (23) zu einem stromaufseitigen Abschnitt der ersten Auslassöffnung (24), einen ersten Auslassbereich (33) von dem stromaufseitigen Abschnitt der ersten Auslassöffnung (24) zu einem stromabseitigen Abschnitt der ersten Auslassöffnung (24), einen zweiten Auslassbereich (35) von einem stromaufseitigen Abschnitt der zweiten Auslassöffnung (25) zu einem stromabseitigen Abschnitt der zweiten Auslassöffnung (25), einen dritten Auslassbereich (37) von einem stromaufseitigen Abschnitt der dritten Auslassöffnung (26) zu einem stromabseitigen Abschnitt der dritten Auslassöffnung (26), einen ersten Knetbereich (32), der zwischen dem Eingabebereich (31) und dem ersten Auslassbereich (33) vorgesehen ist, einen zweiten Knetbereich (34), der zwischen dem ersten Auslassbereich (33) und dem zweiten Auslassbereich (35) vorgesehen ist, einen dritten Knetbereich (36), der zwischen dem zweiten Auslassbereich (35) und dem dritten Auslassbereich (37) vorgesehen ist, und einen Ausgabebereich (38), der einen Abschnitt von einem stromaufseitigen Abschnitt der Ausgabeöffnung (27) zu einer Position der Ausgabeöffnung (27) umfasst, aufweist, wobei das Verfahren Folgendes umfasst:
Eintragen des Rohmaterials in die Eingabeöffnung (23) in dem Zustand, in dem der Doppelschneckenextruder (20) durch das Antriebsmittel (10) angetrieben wird,
Überführen des eingetragenen Rohmaterials zu einer stromabseitigen Seite in dem Einführungsbereich (31),
Komprimieren und Kneten des Rohmaterials in dem ersten Knetbereich (32), wobei eine Überführungsgeschwindigkeit des Rohmaterials in dem ersten Knetbereich (32) langsamer als in dem Einführungsbereich (31) ist,
Ablassen von in dem Rohmaterial enthaltenem Gas durch die erste Auslassöffnung (24) in den ersten Auslassbereich (33), wobei die Überführungsgeschwindigkeit des Rohmaterials in dem ersten Auslassbereich (33) schneller als in dem ersten Knetbereich (32) ist, um einen Kompressionszustand des Rohmaterials zu verringern,
Komprimieren und Kneten des Rohmaterials in dem zweiten Knetbereich (34), wobei die Überführungsgeschwindigkeit des Rohmaterials in dem zweiten Knetbereich (34) langsamer als in dem ersten Auslassbereich (33) ist,
Ablassen von in dem Rohmaterial enthaltenem Gas durch die zweite Auslassöffnung (25) in den zweiten Auslassbereich (35), wobei die Überführungsgeschwindigkeit des Rohmaterials in dem zweiten Auslassbereich (35) schneller als in dem zweiten Knetbereich (34) ist, um den Kompressionszustand des Rohmaterials zu verringern,
Komprimieren und Kneten des Rohmaterials in dem dritten Knetbereich (36), wobei die Überführungsgeschwindigkeit des Rohmaterials in dem dritten Knetbereich (36) langsamer als in dem zweiten Auslassbereich (35) ist,
Ablassen von in dem Rohmaterial enthaltenem Gas durch die dritte Auslassöffnung (26) in dem dritten Auslassbereich (37), wobei die Überführungsgeschwindigkeit des Rohmaterials in dem dritten Auslassbereich (37) schneller als in dem dritten Knetbereich (36) ist, um den Kompressionszustand des Rohmaterials zu verringern, und
Extrudieren des Rohmaterials, das den dritten Auslassbereich (37) von dem Doppelschneckenextruder (20) her durchlaufen hat, in dem Ausgabebereich (38), wobei
die Steuervorrichtung (16) das Antriebsmittel (10) so antreibt, dass eine Temperatur in dem ersten Knetbereich (32) 100°C bis 150°C beträgt, eine Temperatur in dem zweiten Knetbereich (34) 180°C bis 280°C beträgt und eine Temperatur in dem dritten Knetbereich (36) 260°C bis 320°C beträgt und höher als in dem zweiten Knetbereich (34) ist.

10. Kraftstoffherstellungsverfahren gemäß Anspruch 9, wobei die Rotation der Schnecken eine Rückwärtsrichtung-Übertragungskraft auf das Rohmaterial auf einer stromabseitigen Seite des dritten Knetbereichs (36) ausübt.

## Revendications

1. Appareil de production de combustible (1) qui fabrique en continu un combustible carbonisé par carbonisation en compressant et malaxant une matière première organique contenant au moins une résine synthétique, l'appareil comprenant :
une extrudeuse à double vis (20) comportant des doubles vis entraînées à la même vitesse de rotation dans la même direction par un moyen d'entraînement (10), et un boîtier (22) contenant les vis ; et un moyen de commande (16) qui commande le moyen d'entraînement (10), dans lequel
la vis (21) a un arbre rotatif (21a) et un élément lame (210) fourni sur une surface de l'arbre rotatif (21a),
le boîtier (22) a un orifice d'entrée (23) à travers lequel une matière première est chargée, un orifice de sortie (27) à travers lequel une matière transformée est extrudée, et une pluralité d'orifices d'échappement (24, 25, 26) fournis entre l'orifice d'entrée (23) et l'orifice de sortie (27),
les orifices d'échappement (24, 25, 26) sont fournis au moins au niveau de trois emplacements et comportent un premier orifice d'échappement (24), un deuxième orifice d'échappement (25) et un troisième orifice d'échappement (26) dans cet ordre depuis l'amont du boîtier (22),
l'extrudeuse à double vis (20) a une région d'introduction (31) depuis l'orifice d'entrée (23) jusqu'à une partie amont du premier orifice d'échappement (24), une première région d'échappement (33) depuis la partie amont du premier orifice d'échappement (24) jusqu'à une partie aval du premier orifice d'échappement (24), une deuxième région d'échappement (35) depuis une partie amont du deuxième orifice d'échappement (25) jusqu'à une partie aval du deuxième orifice d'échappement (25), une troisième région d'échappement (37) depuis une partie amont du troisième orifice d'échappement (26) jusqu'à une partie aval du troisième orifice d'échappement (26), une première région de malaxage (32) fournie entre la région d'introduction (31) et la première région d'échappement (33), une deuxième région de malaxage (34) fournie entre la première région d'échappement (33) et la deuxième région d'échappement (35), une troisième région de malaxage (36) fournie entre la deuxième région d'échappement (35) et la troisième région d'échappement (37), et une région de sortie (38) comportant une partie depuis une partie amont de l'orifice de sortie (27) jusqu'à une position de l'orifice de sortie (27), dans lequel
si un angle de l'élément lame (210) de la vis rotative par rapport à l'arbre rotatif (21a) est de 90 ° à un maximum dans une vue latérale de la vis, et si l'inclinaison de l'élément lame (210) entraînant le transfert de la matière première chargée vers un côté aval est défini comme une inclinaison de direction avant alors que l'inclinaison de l'élément lame (210) entraînant le transfert de la matière première vers un côté amont est défini comme une inclinaison de direction arrière,
la région d'introduction (31) a une inclinaison de direction avant, et la première région de malaxage (32) a une partie avec une inclinaison de direction avant plus grande que l'inclinaison dans la région d'introduction (31),
la première région d'échappement (33) a une inclinaison de direction avant, et la deuxième région de malaxage (34) a une partie avec une inclinaison de direction avant plus grande que l'inclinaison dans la première région d'échappement (33),
la deuxième région d'échappement (35) a une inclinaison de direction avant, et la troisième région de malaxage (36) a une partie avec une inclinaison de direction avant plus grande que l'inclinaison dans la deuxième région d'échappement (35), et
la troisième région d'échappement (37) a une inclinaison de direction avant, et la région de sortie (38) a une partie avec une inclinaison de direction avant plus grande que l'inclinaison dans la troisième région d'échappement (37), et
le moyen de commande (16) entraîne le moyen d'entrainement (10) de telle sorte qu'une température sur un côté aval dans la première région de malaxage (32) est de 100 °C à 150 °C, une température sur un côté aval dans la deuxième région de malaxage (34) est de 180 °C à 280 °C, et une température sur un côté aval dans la troisième région de malaxage (36) est de 260 °C à 320 °C et plus élevée que dans la deuxième région de malaxage (34).

2. Appareil de fabrication de combustible (1) selon la revendication 1, dans lequel la première région de malaxage (32) est plus courte que la deuxième région de malaxage (34) dans une direction axiale, et la deuxième région de malaxage (34) est plus courte que la troisième région de malaxage (36) dans la direction axiale.

3. Appareil de fabrication de combustible (1) selon la revendication 1 ou 2, dans lequel la première région de malaxage (32) a une première région de malaxage côté amont (32a) continue depuis la région d'introduction (31) et une première région de malaxage côté aval (32b) fournie entre la première région de malaxage côté amont (32a) et la première région d'échappement (33),
une inclinaison de l'élément lame (212) de la vis (21) dans la première région de malaxage côté amont (32a) est plus grande que dans la région d'introduction (31), et
l'élément lame (213) de la vis (21) dans la première région de malaxage côté aval (32b) a une pluralité d'éléments lame (213) ayant une forme ovale sur une vue dans la direction axiale et disposée dans une direction axiale au niveau d'angles décalés dans une direction de rotation, et les éléments lame (213) ont une inclinaison de 90 °.

4. Appareil de fabrication de combustible (1) selon la revendication 1 ou 2, dans lequel
la deuxième région de malaxage (34) a une deuxième région de malaxage côté amont (34a) continue depuis la première région d'échappement (33) et une deuxième région de malaxage côté aval (34b) fournie entre la deuxième région de malaxage côté amont (34a) et la deuxième région d'échappement (35),
une inclinaison de l'élément lame (215) de la vis (21) dans la deuxième région de malaxage côté amont (34a) est plus grande que dans la première région d'échappement (33), et
l'élément lame (216) de la vis (21) dans la deuxième région de malaxage côté aval (34b) a une pluralité d'éléments lame (216) ayant une forme ovale sur une vue dans la direction axiale et disposés dans une direction axiale à des angles décalés dans une direction de rotation, et les éléments lame (216) ont une inclinaison de 90 °.

5. Appareil de fabrication de combustible (1) selon la revendication 1 ou 2, dans lequel
la troisième région de malaxage (36) a une troisième région de malaxage côté amont (36a) continue depuis la deuxième région d'échappement (35), et une troisième région de malaxage côté aval (36c) continue jusqu'à la troisième région d'échappement (37), et une troisième région de malaxage intermédiaire (36b) fournie entre la troisième région de malaxage côté amont (36a) et la troisième région de malaxage côté aval (36c),
une inclinaison de l'élément lame (218) de la vis (21) dans la troisième région de malaxage côté amont (36a) est plus grande que dans la deuxième région d'échappement (35),
l'élément lame (219) de la vis (21) dans la troisième région de malaxage intermédiaire (36b) a une pluralité d'éléments lame (219) ayant une forme ovale dans une vue en direction axiale disposée dans une direction axiale à des angles décalés dans une direction de rotation, et les éléments lame (219) ont une inclinaison de 90 °, et
dans la troisième région de malaxage côté aval (36c), une région de direction avant (36f) dans laquelle l'inclinaison de l'élément lame (220) de la vis (21) est dans une direction avant est fournie sur un côté amont, et une région de direction arrière (36g) dans laquelle l'inclinaison de l'élément lame (221) de la vis (21) est dans une direction arrière est fournie sur un côté aval.

6. Appareil de fabrication de combustible (1) selon la revendication 5, dans lequel la région dans la direction arrière (36g) de la troisième région de malaxage côté aval (36c) est plus courte que la région de direction avant (36f) dans la direction axiale.

7. Appareil de fabrication de combustible (1) selon la revendication 1 ou 2,
la région de sortie (38) a une région de sortie côté amont (38a) continue à partir de la troisième région d'échappement (37), et une région d'ouverture de sortie (38b) continue à partir de la région de sortie côté amont (38a), et
une inclinaison de l'élément lame (223) de la vis (21) dans la région de sortie côté amont (38a) est plus petite que dans la région d'ouverture de sortie (38b).

8. Appareil de fabrication de combustible (1) selon la revendication 7, dans lequel
la région de sortie (38) comprend en outre une région d'extrémité de direction arrière (38c) sur un côté aval de la région d'ouverture de sortie (38b), l'élément lame (225) de la vis (21) ayant une inclinaison de direction arrière.

9. Procédé de fabrication du combustible pour la fabrication continue d'un combustible carbonisé par carbonisation par compression et malaxage d'une matière première organique contenant au moins une résine synthétique avec un appareil de fabrication de combustible (1),
l'appareil de fabrication de combustible (1) incluant une extrudeuse à double vis (20) comportant des doubles vis entraînées à la même vitesse de rotation dans la même direction par un moyen d'entraînement (10), et un boîtier (22) contenant les vis, et les moyens de commande (16) qui commandent le moyen d'entraînement (10),
la vis (21) ayant un arbre rotatif (21a) et un élément lame (210) fourni sur une surface de l'arbre rotatif (21a),
le boîtier (22) ayant un orifice d'entrée (23) à travers lequel une matière première est chargée, un orifice de sortie (27) à travers lequel une matière transformée est extrudée, et une pluralité d'orifices d'échappement (24, 25, 26) fournis entre l'orifice d'entrée (23) et l'orifice de sortie (27),
les orifices d'échappement (24, 25, 26) fournis au moins au niveau de trois emplacements et comportent un premier orifice d'échappement (24), un deuxième orifice d'échappement (25) et un troisième orifice d'échappement (26) dans cet ordre à partir de l'amont du boîtier (22),
l'extrudeuse à double vis (20) ayant une région d'introduction (31) à partir de l'orifice d'entrée (23) jusqu'à une partie amont du premier orifice d'échappement (24), une première région d'échappement (33) à partir de la partie amont du premier orifice d'échappement (24) jusqu'à une partie aval du premier orifice d'échappement (24), une deuxième région d'échappement (35) depuis une partie amont du deuxième orifice d'échappement (25) jusqu'à une partie aval du deuxième orifice d'échappement (25), une troisième région d'échappement (37) depuis une partie amont du troisième orifice d'échappement (26) jusqu'à une partie aval du troisième orifice d'échappement (26), une première région de malaxage (32) fournie entre la région d'introduction (31) et la première région d'échappement (33), une deuxième région de malaxage (34) fournie entre la première région d'échappement (33) et la deuxième région d'échappement (35), une troisième région de malaxage (36) fournie entre la deuxième région d'échappement (35) et la troisième région d'échappement (37), et une région de sortie (38) comportant une partie depuis une partie amont de l'orifice de sortie (27) jusqu'à une position de l'orifice de sortie (27), le procédé comprenant :
le chargement de la matière première dans l'orifice d'entrée (23) dans l'état dans lequel l'extrudeuse à double vis (20) est entraînée par le moyen d'entraînement (10) ;
le transfert de la matière première chargée jusqu'à un côté aval dans la région d'introduction (31) ;
la compression et le malaxage de la matière première dans la première région de malaxage (32), une vitesse de transfert de la matière première est plus lente dans la première région de malaxage (32) que dans la région d'introduction (31) ;
la décharge d'un gaz contenu dans la matière première à travers le premier orifice d'échappement (24) dans la première région d'échappement (33), la vitesse de transfert de la matière première étant plus rapide dans la première région d'échappement (33) que dans la première région de malaxage (32) pour soulager un état de compression de la matière première ;
la compression et le malaxage de la matière première dans la deuxième région de malaxage (34), la vitesse de transfert de la matière première étant plus lente dans la deuxième région de malaxage (34) que dans la première région d'échappement (33) ;
la décharge du gaz contenu dans la matière première à travers le deuxième orifice d'échappement (25) dans la deuxième région d'échappement (35), la vitesse de transfert de la matière première étant plus rapide dans la deuxième région d'échappement (35) que dans la première la deuxième région de malaxage (34) pour soulager l'état de compression de la matière première ;
la compression et le malaxage de la matière première dans la troisième région de malaxage (36), la vitesse de transfert de la matière première étant plus lente dans la troisième région de malaxage (36) que dans la deuxième région d'échappement (35) ;
la décharge du gaz contenu dans la matière première à travers le troisième orifice d'échappement (26) dans la troisième région d'échappement (37), la vitesse de transfert de la matière première étant plus rapide dans la troisième région d'échappement (37) que dans la troisième région de malaxage (36) pour soulager l'état de compression de la matière première ; et
l'extrusion de la matière première ayant passé à travers la troisième région de d'échappement (37) de l'extrudeuse à double vis (20) dans la région de sortie (38), dans lequel le moyen de commande (16) entraine le moyen d'entraînement (10) de telle sorte qu'une température dans la première région de malaxage (32) est de 100 °C à 150 °C, une température dans la deuxième région de malaxage (34) est de 180 °C à 280 °C, et une température dans la troisième région de malaxage (36) est de 260 °C à 320 °C et plus élevée que dans la deuxième région de malaxage (34).

10. Procédé de fabrication de combustible selon la revendication 9 dans lequel la rotation des vis impartit une force de transfert de direction arrière à la matière première sur un côté aval de la troisième région de malaxage (36).
